# DEMANDE DE BREVET EUROPEEN

(11) **EP 4 768 172 A2**
(43) Date de publication de la demande: **01.07.2026**
(21) Numéro de dépôt: 26177124.0
(22) Date de dépôt: 16.04.2019
(51) Int. Cl.: B23K 103/04

(54) **PROCÉDÉ DE RÉALISATION D'UN EFFET VISUEL D'IRISATION SUR LA SURFACE D'UN MATÉRIAU, DISPOSITIFS POUR SA MISE EN OEUVRE ET PIÈCE AINSI OBTENUE**

(62) Demande divisionnaire de: 19721852.2
(71) Demandeur: Aperam, 1882 Luxembourg (LU)
(72) Inventeur: GUILLOTTE, Ismaël, 62131 VERQUIN (FR); LATOUCHE, Baptiste, 59800 LILLE (FR); LOPES, Marcos Vinicius, 62400 BETHUNE (FR); DAMASSE, Jean-Michel, 42000 SAINT ETIENNE (FR); DIET, Francis, 75009 PARIS (FR)
(74) Mandataire: Lavoix

(57) **Abrégé**

Procédé de réalisation d'un effet visuel d'irisation sur la surface d'une pièce (1), selon lequel on envoie sur ladite surface un faisceau laser (7), à durée de pulse inférieure à une nanoseconde, dans le champ optique du système de focalisation (12) d'un dispositif comprenant une source laser (6), un scanner (11) et ledit système de focalisation (12), de façon à conférer à ladite surface sur la largeur dudit pulse une structure sous forme de vaguelettes présentant une même orientation, et on réalise un balayage par ledit scanner (11) de ladite surface par ledit rayonnement laser (7) selon une série de lignes (14, 15, 16) successives, ou une matrice de points, la largeur de chaque ligne (14, 15, 16) ou la dimension de chaque point de chaque matrice étant égale au diamètre dudit pulse, au moyen d'un déplacement relatif de ladite surface et du dispositif émettant ledit faisceau laser, caractérisé en ce qu'entre la réalisation du balayage selon deux lignes (14, 15, 16) consécutives ou deux points voisins, on modifie la polarisation du faisceau laser (7) de façon à créer des vaguelettes d'orientations différentes sur deux lignes (14, 15, 16) successives ou deux points voisins.

Dispositifs pour la mise en œuvre de ce procédé, et pièce ainsi obtenue.

## Description

La présente invention concerne les traitements laser des surfaces des tôles en acier inoxydable ou autres matériaux, destinés à conférer à ces surfaces un aspect irisé.

Le traitement irisé, aussi appelé « LIPPS » ou « ripples » consiste à irradier la surface d'un matériau avec un rayonnement laser pulsé de faible durée de pulse (inférieure à une nanoseconde). Le diamètre de chaque pulse à son lieu d'impact sur le matériau à traiter est typiquement de l'ordre de 10 à quelques centaines de µm. Si l'énergie du faisceau incident est suffisamment importante, cette irradiation induit la modification de la structure et/ou la réorganisation de la surface du matériau qui va adopter une structure périodique. Cependant, si l'énergie du faisceau est trop importante, un phénomène d'ablation par vaporisation/sublimation/onde de choc peut avoir lieu, préférentiellement ou conjointement à la formation de la structure superficielle périodique. On peut aisément déterminer expérimentalement quelle gamme de quantité d'énergie est à utiliser pour un matériau donné, afin d'obtenir l'effet d'irisation désiré avec ou sans altération de l'état de surface ou de la brillance.

Un tel traitement est pratiqué, notamment, mais pas uniquement, sur des aciers inoxydables de tous types. Le but de ce traitement peut être purement esthétique, mais il permet aussi de modifier la mouillabilité de la surface, et aussi sa résistance à la friction et à réduire l'adhérence bactérienne. Le traitement peut se faire directement sur la surface de l'objet sur lequel se trouve la couche de passivation de l'acier inoxydable sans besoin d'une activation/dépassivation préalable.

D'autres matériaux sur lesquels ce traitement est pratiqué sont, notamment, des métaux divers, des polymères tels que le PVC, des céramiques, le verre.

On connait du document DE 10 2010 034085 un procédé de structuration d'une surface au moyen d'impulsions laser ultra-courtes composées d'ondes électromagnétiques polarisées ou de rayonnement électromagnétique polarisé.

On connait par ailleurs du document DE 10 2005 043495 un procédé d'amélioration des propriétés de surface mécaniques, chimiques et/ou biologiques d'une surface au moyen d'un laser.

Dans la suite du texte, le cas des aciers inoxydables sera privilégié, étant entendu que l'invention est applicable à tous les matériaux métalliques ou non-métalliques qui sont actuellement, ou seraient connus dans l'avenir, pour pouvoir présenter un aspect irisé suite à un traitement laser effectué comme indiqué, éventuellement en adaptant les paramètres de fonctionnement précis de l'installation (puissance et fréquence des lasers...) dont il est connu qu'ils jouent un rôle dans l'obtention de l'aspect irisé résultant de la formation d'une structure superficielle périodique.

Bien que le mécanisme exact de formation de cette structure superficielle périodique ne soit pas encore déterminé, les tests et caractérisations réalisés par différents laboratoires montrent qu'en fonction du nombre de passes de laser et/ou de l'énergie de pulse et/ou des paramètres de balayage, la structure de la surface peut présenter l'une des quatre structures suivantes, selon l'énergie d'irradiation totale par unité de surface, ces structures étant classées par ordre d'énergie croissant et leurs dénomination étant habituelles pour l'homme du métier, même non anglophone :
1) Structure dite « HSFL » (High Spatial Frequency LIPPS):
   Cette structure est composée de petites vaguelettes qui, dans le cas des aciers inoxydables, sont orientées dans le sens de la polarisation du faisceau laser incident. La fréquence spatiale de ces vaguelettes est inférieure à la longueur d'onde du laser utilisé pour le traitement.
2) Structure dite « LSFL » (Low Spatial Frequency LIPPS):
   Cette structure est composée de vaguelettes plus grosses que les précédentes orientées, dans le cas des aciers inoxydables, dans le sens perpendiculaire à la polarisation du faisceau incident. La fréquence spatiale de ces vaguelettes est légèrement inférieure, ou supérieure, ou égale à la longueur d'onde du laser. Pour le traitement d'une surface en acier inoxydable avec un laser de longueur d'onde 1064 nm, la périodicité des vaguelettes est de l'ordre de 1 µm. Il est encore possible de voir la structure HSFL dans les creux de la structure LSFL.
   On notera que pour certains matériaux, les orientations respectives des structures HSFL et LSFL peuvent être inversées par rapport à ce qu'elles sont pour les aciers inoxydables.
3) Structure dite « Grooves » ou « Bumps » :
   Cette structure est composée de bosses de dimensions micrométriques couvrant l'intégralité de la surface traitée. Ces bosses s'organisent selon une structure s'apparentant à un aspect « peau de serpent ».
4) Structure en pics ou « spikes » :
   Cette structure est composée de pics dont la hauteur va de quelques micromètres à quelques dizaines de micromètres. La distance séparant les pics dépend des paramètres du traitement.

On trouvera plus de détails sur ces structures et le mécanisme de leurs apparitions notamment dans l'article « Evolution of nano-ripples on stainless steel irradiated by picosecond laser pulses », Journal of Laser Applications 26, février 2014, de B. Liu et al. Il y est notamment dit que, pour un nombre de pulses égal, une augmentation de la fluence de l'irradiation conduit à obtenir des HSFL plutôt que des LSFL (comme on vient de le dire), alors que pour une fluence égale, un nombre de pulses plus élevé conduit à la création de LSFL plutôt que de HSFL, jusqu'à ce que le nombre de pulses devienne trop élevé pour que des ripples soient observées. La configuration exacte de la surface après irradiation résulte donc d'un mécanisme mettant en jeu à la fois le nombre de pulses reçus et l'énergie délivrée par chacun d'entre eux, pour un matériau donné. Ce mécanisme est complexe, mais pour un matériau donné, des conditions d'obtention fiables de l'une ou l'autre des configurations citées ci-dessus peuvent être déterminées expérimentalement par l'utilisateur.

En général, dans les deux premiers cas, cette organisation périodique de la surface permet un phénomène induit, bien connu des praticiens des traitements de surface par laser, qui est la diffraction de la lumière par la création d'un réseau optique lorsque l'échantillon traité est placé sous une source lumineuse. On peut alors observer en fonction des orientations et positions de l'utilisateur et de la lumière les couleurs de l'arc-en-ciel sur l'échantillon. C'est ce que l'on appelle un « aspect irisé ».

Cet aspect n'existe plus lorsque la surface de l'échantillon présente de façon prononcée un aspect selon les troisième et quatrième cas précités, car, dans ces deux cas, l'énergie apportée par la source laser sur la surface de l'échantillon a atteint un niveau trop élevé, au moins localement, entraînant des déformations de la surface qui ne permettent plus l'obtention de l'aspect irisé, car la structuration de la surface à perdu son caractère périodique.

Cette irisation ne doit pas être confondue avec les colorations de la surface des aciers inoxydables qui sont obtenues, de manière volontaire ou involontaire, par des traitements plasma ou des oxydations superficielles dues à un passage dans un four ou par le passage d'un chalumeau. L'aspect irisé ne résulte pas d'une coloration à proprement parler, mais de l'apparition de couleurs sur la surface, sous certaines conditions d'observation. L'absence de périodicité de la structure surfacique dans les procédés de coloration proprement dits est une différence essentielle entre l'irisation des surfaces dont relève la présente invention et la coloration des inox par plasma, passage au four ou passage d'un chalumeau.

Cependant, l'observation ou non d'une telle irisation est très directionnelle, c'est-à-dire que l'observation de cette irisation, et l'intensité de l'irisation observée, sont fortement dépendantes de l'angle selon lequel on observe la surface du matériau.

Un autre problème auquel les praticiens de l'irisation des surfaces sont confrontés est le suivant.

Il est actuellement possible de réaliser en laboratoire des échantillons homogènes avec un traitement irisé en utilisant soit uniquement un système couplant un laser et un scanner réalisant à la fois un axe rapide de défilement du faisceau laser (via une roue polygonale ou un miroir galvo) et un axe lent de défilement du faisceau laser (via un miroir galvo), soit un laser scanner couplé avec un bras robotisé réalisant le déplacement du scanner selon l'axe lent.

Le déplacement du scanner peut être remplacé selon l'axe lent, par un déplacement de la tôle à traiter, face à un laser qui reste fixe selon l'axe lent. On peut aussi prévoir que le laser reste fixe selon les deux axes (lent et rapide), et que ce soit l'objet à traiter qui soit déplacé selon les deux axes.

Le mécanisme de formation des structures qu'on a décrites dépend de l'énergie totale transférée à la surface du matériau et de la répartition spatiale et temporelle de cette énergie. Ainsi, l'« intensité » de l'irisation obtenue grâce aux LSFL va augmenter entre chaque nouveau passage du laser sur les zones déjà traitées, jusqu'à atteindre un maximum, puis elle va décroître lorsque les LSFL vont progressivement se transformer en "Bumps" sous l'effet de l'apport d'énergie supplémentaire.

Cela implique qu'il existe un optimum d'énergie à transférer à la surface du matériau, optimum pour lequel l'effet de l'irisation est le plus intense, et qu'il est avantageux de déterminer cet optimum et le réaliser sur l'ensemble de la surface concernée.

Cependant, ces échantillons sont généralement de petite taille et/ou réalisés avec des productivités faibles.

La limitation en taille des échantillons tient principalement de la limitation des dimensions des champs optiques des ensembles formés par le laser, le scanner et le système de focalisation, qui peut être, par exemple, une lentille, ou un miroir convergent. En effet, l'obtention d'un traitement homogène nécessite un contrôle parfait du traitement en tous points de la surface. Or, quelles que soient les systèmes de focalisation utilisés, ils possèdent un champ optique sur lequel ils ont un effet stable dans une zone optimale, mais dès que l'on sort de cette zone optimale, le système induit des distorsions et/ou des atténuations de la puissance du faisceau laser, qui se traduisent par un traitement non homogène entre la zone optimale du champ optique et les zones qui sont situées au-delà de cette zone optimale.

Ainsi, pour traiter des grandes surfaces de tôles d'acier inoxydable, il faudrait des systèmes de focalisation à large champ, qui seraient très onéreux et très sensibles. De plus, il faudrait pouvoir les utiliser conjointement avec des lasers de durée de pulse ultra-courtes de forte puissance, qui ne sont pas encore largement disponibles sur le marché.

Pour remédier à ce double inconvénient, les solutions connues sont d'utiliser des systèmes de focalisation classiques et des lasers actuellement disponibles sur le marché et soit de placer côte à côte plusieurs dispositifs incluant ces systèmes de focalisation et lasers dans le cas d'un traitement en ligne d'une bande en défilement, soit de réaliser le traitement en plusieurs fois (en découpant la surface en bandes pour un système discontinu), soit de combiner ces deux solutions. Cependant cette solution nécessite d'avoir une gestion particulièrement soigneuse des zones de jonctions entre les champs optiques de deux dispositifs successifs, qui, si elles sont mal réalisées, peuvent causer un phénomène appelé « stitching » par les hommes du métier, et que l'on décrira plus loin.

Ce mécanisme empêche donc d'avoir recours à un recouvrement significatif des champs pour joindre deux champs de traitement laser consécutifs.

En effet, s'il y a un recouvrement significatif des champs, qui serait de l'ordre de grandeur de la résolution de l'œil humain, cela implique que la zone de recouvrement reçoit le double de la quantité d'énergie transférée sur le restant de la surface. Ce doublement de l'énergie injectée lors du traitement induit un changement local de la structure, et donc de l'aspect de surface, par rapport aux zones qui n'ont reçu que la quantité d'énergie nominale du traitement, et ce changement est visible à l'œil nu. C'est ce phénomène que l'on appelle couramment « stitching », en ce qu'il rend visible la zone de jonction des deux champs.

Inversement, un écartement des champs de traitement laser, qui permettrait d'éviter assurément ce phénomène de doublement local du traitement et le « stitching » qui en résulterait, impliquerait la formation d'une zone non traitée, ou moins traitée que la normale, entre les deux champs. Cette zone serait également visible à l'œil nu.

Il faudrait donc réaliser une jonction quasi-parfaite entre les champs consécutifs de traitement laser.

D'autre part, la réalisation de ce type de traitement à forte productivité implique de travailler à haute fréquence (à partir de centaines de kHz). Les systèmes de balayage utilisés pour ce type de traitement sont, le plus typiquement, des scanners possédant au moins une roue polygonale. A haute fréquence, ces systèmes présentent généralement des problèmes de synchronisation entre l'électronique du laser et celle du scanner. Ces écarts de synchronisation induisent un décalage de la position du premier pulse de la ligne par rapport à sa position visée, et donc de la ligne entière. Bien que cet écart soit prévisible et calculable (car résultant de la différence des fréquences de gestion des deux appareils), il est subi dans la plupart des systèmes actuels, et peut représenter un écart de quelques dizaines de micromètres entre les débuts des lignes de traitement (lignes qui sont dues au mouvement de la roue polygonale). Cet écart est fonction de la vitesse de rotation du polygone et de la fréquence propre du laser, et l'expérience montre qu'un chevauchement des champs avec un tel écart est déjà suffisant pour que la zone où le traitement a été doublé puisse influer sur l'aspect irisé de la tôle.

Certains systèmes en développement possèdent un moyen interne de corriger partiellement ce décalage, par l'action d'un miroir déflecteur supplémentaire, dit « galvo », fonctionnant à la manière d'un galvanomètre, situé en amont du polygone. Par exemple, la firme RAYLASE a présenté le concept d'un tel système au congrès SLT 2018 à Stuttgart les 5 et 6 juin 2018 : « New Generation of High-Speed Polygon-Driven 2D Deflection Units and Controller for High-Power and High-Rep. Rate Applications » (présentation de E. Wagner, M. Weber et L. Bellini). L'amélioration n'est, cependant, pas à elle seule d'une qualité suffisante pour que les effets indésirables d'un décalage des champs disparaissent de façon assurée. En effet, les parties initiale et finale de chaque ligne risquent de ne pas être traitées avec le même apport d'énergie que le restant de la ligne Pour résoudre ce déficit local de traitement, on peut penser à augmenter l'apport d'énergie sur le restant de la ligne, mais on risque alors de dépasser l'apport d'énergie maximal adapté à la création des LSFL, donc de réduire voire supprimer l'irisation. L'utilisation d'un miroir galvo en amont du polygone peut atténuer ce problème, mais ce matériel n'est encore qu'au stade expérimental et s'il aboutit commercialement il sera forcément plus complexe et plus cher que ce qui existe. Pour l'ensemble des autres systèmes, ce manque de synchronisation implique un besoin d'un recouvrement « virtuel » de l'ordre d'au moins deux fois la dispersion des positions des débuts de lignes entre les différents champs optiques. Ainsi, ce recouvrement se traduit par une bande hétérogène où il n'y a pas de zones non traitées entre les champs, mais où il peut y avoir un recouvrement de deux fois cette dispersion par endroits.

Si les bords de chaque champ sont définis comme « droits », la zone de recouvrement se présente alors comme une fine bande rectiligne, de largeur sensiblement égale à la largeur des lignes de traitement, donc sensiblement égale au double du diamètre du pulse, sur laquelle l'aspect du traitement n'est pas identique au reste de la surface. De même si les bords du champ de traitement sont définis par un motif périodique, ce dernier restera visible à l'œil nu.

Plusieurs stratégies sont alors possibles pour tenter d'atténuer ou de masquer l'hétérogénéité de la zone de recouvrement.

La première stratégie consiste à utiliser un décalage aléatoire entre deux lignes qui se succèdent perpendiculairement à la direction de balayage du scanner, afin que les jonctions entre les champs optiques de deux lignes successives ne forment pas, prises ensemble, un motif linéaire ou périodique, et donc que ce motif soit moins visible que s'il constituait une ligne sensiblement droite ou un motif périodique. Le but est de réaliser un traitement dont les défauts ne seraient pas détectés facilement par l'œil humain, qui repère rapidement ce qui est périodique et/ou linéaire. Dans ce cas, si l'on considère que le traitement optimal de la surface de la tôle 1 nécessite N passages, le décalage aléatoire des N séries de lignes superposées est identique d'un passage à l'autre et d'un champ à l'autre

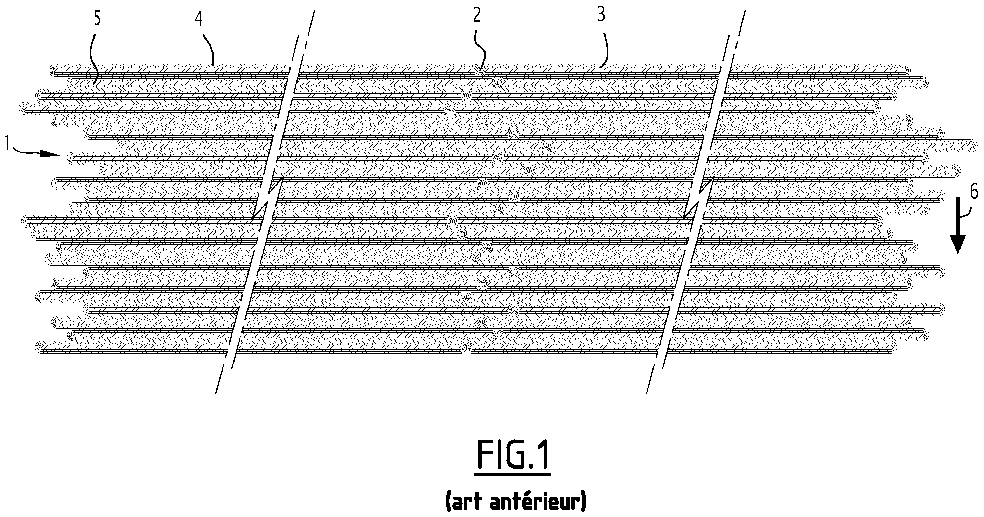

La figure 1 schématise une telle configuration, réalisée sur une tôle 1. On y voit que, pour des séries de deux passages (bandes de scan) du scanner correspondant à deux champs successifs situés dans le prolongement l'un de l'autre, les jonctions 2 des champs optiques respectifs des deux séries 3, 4 de lignes sont décalés d'une façon non linéaire. Autrement dit, les jonctions 2 respectives des lignes 3, 4 ne forment pas entre elles une droite ou un motif périodique, mais une ligne brisée qui est moins aisément discernable que ne le serait une ligne droite. Une certaine périodicité des décalages entre des jonctions 2 successives peut être acceptable, mais la période doit s'étendre sur une longueur suffisante (typiquement au moins 10 fois la valeur maximale du décalage entre deux jonctions 2 de deux lignes successives 4, 5 selon la direction de progression 6 des scanners) pour que le motif de cette périodicité ne soit pas visible.

**Il** est à noter qu'entre deux lignes successives 4, 5 réalisées par le même champ optique et, donc, décalées dans la direction de progression 6 des scanners (ou dans la direction de progression de la tôle 1 si c'est elle qui est mobile dans cette direction alors que les scanners sont fixes), ce problème ne se pose généralement pas avec la même intensité, sauf si le recouvrement entre les lignes est franchement mauvais. En effet, comme on l'a dit, les différentes lignes 3, 4, 5 ont des largeurs sensiblement égales au diamètre du pulse, soit, par exemple, de 30-40 µm environ, généralement. Ce diamètre dépend de la lentille et du diamètre du faisceau laser entrant dans la lentille. Pour assurer qu'il ne subsiste pas, sur la surface de la tôle, de zones non traitées entre deux lignes 4, 5 successives selon l'axe lent, il est possible de régler le galvo du scanner et/ou le dispositif de déplacement de la tôle pour que deux lignes 4, 5 successives se chevauchent. Autrement dit, les lignes 4, 5 sont formées après un décalage des positions relatives des pulses de chaque scanner et de la tôle 1 qui est légèrement inférieur au diamètre des pulses. **Il** peut donc bien y avoir un double traitement de la surface de la tôle 1 dans les zones de chevauchement des lignes 4, 5, mais comme le décalage des lignes 4, 5 est maîtrisable avec une bonne précision, nettement meilleure que la précision du recouvrement de champs optiques voisins, la largeur de ces zones, si elles existent, est de toute façon suffisamment faible pour que le double traitement ne se traduise pas visuellement par une perturbation de l'effet irisé par rapport à ce que l'on obtient sur le restant de la surface de la tôle 1.

Il doit être entendu que, sur la figure 1, chaque série de lignes 3, 4 situées dans le prolongement l'une de l'autre et se rejoignant au niveau de la jonction 2 est constituée elle-même de la superposition de N lignes superposées, avec, par exemple, N = 3. Le nombre de lignes superposées pour un champ optique donné dépend de la quantité d'énergie qu'il est nécessaire d'apporter à la surface de la tôle 1 pour obtenir la configuration en vaguelettes désirée, responsable de l'irisation de la surface. Plus cette quantité est élevée, plus le nombre de lignes est élevé, pour une même énergie apportée par chaque passage du laser.

Autant que possible, cette configuration présente une structure du type LSFL, dont on a vu qu'elle était la plus apte à fournir cette irisation dans des conditions qui sont, cependant, dépendantes de l'angle de vision. L'énergie apportée selon une ligne donnée doit donc être contenue entre une limite inférieure en-dessous de laquelle on n'aurait pas de vaguelettes suffisamment prononcées, et une limite supérieure au-dessus de laquelle on augmente trop la probabilité d'une présence excessive de Bumps. Ces limites sont, bien entendu, très dépendantes de multiples facteurs, notamment le matériau précis de la tôle 1, son état de surface, l'énergie apportée par les pulses lors de chacun des passages du laser sur une zone donnée... Des expériences de routine permettent à l'homme du métier de définir ces limites en fonction du matériel dont il dispose et du matériau à traiter.

Bien que cette première approche permette de diminuer sensiblement la visibilité du recouvrement de deux champs successifs, en fonction du matériau utilisé et/ou de l'effet visé, du fait que les recouvrements entre champs ne se font pas sur une ligne droite, mais sur une ligne brisée, qui suit les décalages entre les recouvrements, elle peut, cependant, s'avérer insuffisante pour rendre la surface suffisamment homogène. Dans ce cas, il est possible de d'utiliser la même approche, mais en changeant le décalage entre les différents passages du laser. Cela permet d'augmenter encore le caractère aléatoire du motif de positionnement des recouvrements par rapport au cas précédent. Autrement dit, la ligne brisée qui joint les recouvrements successifs et constitue ledit motif présente un caractère non-périodique ou aléatoire encore moins évident. Mais il faut tout de même veiller à ce que les champs de traitement juxtaposés aient les mêmes décalages que le premier à chaque passe, car il faut éviter l'accumulation locale de passes pour rester homogène, comme il faut que tout point de la surface reçoive la même quantité d'énergie selon la même distribution, le même nombre de pulses et de passes.

L'utilisation d'un motif de bord de champ aléatoire permet donc de répartir les points d'hétérogénéité sans que ceux-ci forment une ligne droite qui serait sans doute trop visible à l'œil nu. Lorsque le motif qu'ils dessinent est identique pour toutes les passes, ces points sont des localisations où l'hétérogénéité est forte, car la discontinuité de la ligne est marquée à chaque passe.

Cependant, lorsque ce motif est différent à chaque passe (qu'il soit aléatoire ou non), bien que le nombre de points d'hétérogénéité soit multiplié par le nombre de passes N, ces points ont une hétérogénéité moins prononcée par rapport au reste de la surface que dans le cas précédent, car ils ont reçu N-1 passes continues et seulement une passe discontinue.

Cette deuxième approche permet un masquage efficace de la zone de jonction des champs de traitement. Cependant, elle nécessite un contrôle rigoureux des positions des champs de traitement les uns par rapport aux autres, que ce soit dans la direction des lignes de laser (afin qu'il n'y ait ni recouvrement, ni zone non traitée) ou que ce soit dans la direction transverse (si les champs sont décalés, les jonctions ne seront plus exactes et cela pourra entraîner la formation de zones insuffisamment traitées ou, au contraire, excessivement traitées. De plus, en fonction des paramètres choisis, il est parfois possible de percevoir les lignes ou la périodicité des lignes de traitement sur la surface. Un décalage d'altitude de ces lignes entre des champs juxtaposés a tendance à amplifier la visibilité de la jonction du fait du déphasage entre les lignes.

La réalisation du traitement sous forme de lignes permet de profiter de la haute fréquence de répétition des lasers à ultra courte durée de pulse pour augmenter la productivité du traitement. Ainsi, en un seul balayage de la ligne par le scanner, la ligne a pu être irradiée N fois si la distance entre deux pulses successifs est égale au diamètre du pulse sur N. Cela permet donc de gommer l'effet que pourraient avoir des petites fluctuations de puissance sur l'homogénéité de la surface.

Ce mode d'action a, cependant, l'inconvénient de former des zones d'hétérogénéités aux extrémités des lignes sur des distances équivalentes au diamètre d'un pulse (quelques dizaines de micromètres).

Pour éviter cela, une solution envisageable serait de réaliser le traitement en faisant dessiner aux pulses un motif en forme non plus de lignes, mais de matrice de points, lesdits points étant assimilables à des pixels, et en exécutant autant de matrices que nécessaire pour que la surface de la tôle soit, en fin de traitement, entièrement recouverte par les impacts des pulses qui ne se recouvrent que très faiblement ou pas du tout. Ainsi, la jonction des différents champs (et des différents pulses de chaque champ) ne forme pas de motif continu de relativement grandes dimensions, et n'est, en principe, plus visible. Chaque point a une forme et une dimension (par exemple circulaire pour un laser gaussien) comparables à celles du pulse.

L'approche par points n'est cependant pas encore possible avec une haute productivité à cause des problèmes de synchronisation entre le laser et le scanner cités précédemment. En effet, pour que cette approche soit valable et fournisse un traitement à l'aspect final homogène, il faut que le laser irradie précisément chaque fois la même zone (le même point) afin d'avoir l'effet cumulé nécessaire à la formation du même niveau d'intensité des vaguelettes de la structure LSFL en chaque point. Or ce manque de synchronisation entraînant un décalage aléatoire pouvant être de dimensions similaires à celles du pulse, il n'est pas possible d'atteindre la précision demandée pour l'irradiation.

Ce problème pourrait être partiellement résolu grâce à l'utilisation de la nouvelle génération de scanners, ceux-ci possédant un galvo additionnel pour la correction et/ou l'anticipation de ce décalage qui serait dû à la mauvaise synchronisation. Dans ce cas, la précision de la juxtaposition de deux champs s'en trouverait également améliorée, et l'homogénéité globale de la surface également. Toutefois, la productivité du procédé demeurerait insatisfaisante pour le traitement de pièces de grande surface.

De plus, le principe du traitement par points n'est pas, en lui-même, capable de résoudre le problème de l'impossibilité d'observer l'irisation selon tous les angles de vision souhaités.

Le but de l'invention est de proposer un procédé de traitement au laser à pulses ultra-courts d'une surface d'un produit tel qu'une tôle en acier inoxydable, mais pas seulement, permettant de lui conférer une irisation paraissant homogène à la suite d'un traitement selon au moins la plupart, et de préférence tous les angles d'observation, même si cette irisation est obtenue au moyen d'une pluralité de champs juxtaposés.

Egalement, ce procédé devrait, optimalement, dans le cas d'un traitement par lignes, conduire à rendre invisible à l'œil nu la zone de jonction de plusieurs champs optiques successifs qui seraient disposés de façon à ce que, pris ensemble, ils permettent de traiter une plus grande portion de la surface (typiquement sa totalité) que ne pourrait le faire un champ optique unique. Ce procédé devrait avoir une bonne productivité pour qu'il soit applicable au traitement de produits de grande surface.

A cet effet, l'invention a pour objet un procédé de réalisation d'un effet visuel d'irisation sur la surface d'une pièce, selon lequel on envoie sur ladite surface un faisceau laser, à durée de pulse inférieure à une nanoseconde, dans le champ optique du système de focalisation d'un dispositif comprenant une source laser, un scanner et ledit système de focalisation, de façon à conférer à ladite surface sur la largeur dudit pulse une structure sous forme de vaguelettes présentant une même orientation, et on réalise un balayage par ledit scanner de ladite surface par ledit rayonnement laser selon une série de lignes successives, ou une matrice de points, la largeur de chaque ligne ou la dimension de chaque point de chaque matrice étant égale au diamètre dudit pulse, au moyen d'un déplacement relatif de ladite surface et du dispositif émettant ledit faisceau laser, caractérisé en ce qu'entre la réalisation du balayage selon deux lignes consécutives ou deux points voisins, on modifie la polarisation du faisceau laser de façon à créer des vaguelettes d'orientations différentes sur deux lignes successives ou deux points voisins.

La polarisation du faisceau laser peut être modifiée selon un motif périodique, ledit motif périodique s'étendant sur M lignes consécutives, M étant égal à au moins 2, de préférence à au moins 3.

Deux lignes successives ou deux points voisins ont de préférence des angles de polarisation qui diffèrent d'au moins 20° et d'au plus 90°.

On peut envoyer sur ladite surface un faisceau laser, à durée de pulse inférieure à une nanoseconde, dans le champ optique du système de focalisation d'un premier dispositif comprenant une source laser, un scanner et ledit système de focalisation, et envoyer sur ladite surface un faisceau laser, à durée de pulse inférieure à une nanoseconde, dans le champ optique du système de focalisation d'au moins un deuxième dispositif comprenant une source laser, un scanner et ledit système de focalisation, et les polarisations de deux lignes situées dans le prolongement l'une de l'autre, ou de deux points voisins, appartenant à deux champs voisins, étant identiques.

On peut réaliser ledit déplacement relatif de ladite surface de ladite pièce et du ou des dispositif(s) émettant ledit ou lesdits faisceau(x) laser en plaçant ladite pièce sur un support mobile.

On peut réaliser ledit déplacement relatif de ladite surface de ladite pièce et du ou des dispositif(s) émettant ledit ou lesdits faisceau(x) laser en plaçant le ou les dispositif(s) émettant ledit ou lesdits faisceau(x) laser sur un support mobile.

Ladite pièce peut être une tôle.

Ladite surface de ladite pièce peut être tridimensionnelle
Ladite pièce peut être en un acier inoxydable.

L'invention a également pour objet un dispositif unitaire pour l'imposition d'un aspect irisé à la surface d'une pièce par formation de vaguelettes sur ladite surface par le pulse d'un faisceau laser, comportant une source laser générant un faisceau laser de durée de pulse inférieure à 1 ns, un système optique de mise en forme du faisceau, un scanner qui permet au pulse du faisceau, après son passage dans un système de focalisation, de balayer sous forme de lignes ou de matrice de points un champ optique à la surface de la pièce, et des moyens pour créer un mouvement relatif entre ledit dispositif et ladite pièce de manière à réaliser le traitement sur au moins une partie de la surface de ladite pièce, caractérisé en ce que ledit système optique comporte un système optique de polarisation qui confère une polarisation déterminée audit faisceau, et des moyens pour faire varier cette polarisation pour que, sur ladite surface, deux lignes ou deux points voisins soient réalisés avec des pulses de polarisations différentes.

De préférence, ledit dispositif permet de réaliser deux lignes ou deux points voisins avec des pulses de polarisations qui différent d'au moins 20°.
ledit dispositif peut comporter des moyens de mesure de la distance entre le système de focalisation et la surface de la pièce reliés à des moyens de commande du système de focalisation et/ou de la distance entre le système de focalisation et la surface de la pièce pour maintenir un diamètre de pulse et une fluence constants sur ladite surface, quelle que soit ladite distance.

Lesdits moyens pour créer un mouvement relatif entre ledit dispositif et ladite pièce peuvent comprendre un support mobile pour la pièce.

L'invention a également pour objet un dispositif pour l'imposition d'un aspect irisé à la surface d'une pièce par formation de vaguelettes sur ladite surface par le pulse d'un faisceau laser, caractérisé en ce qu'il comporte au moins deux dispositifs unitaires du type précédent, dont les champs optiques des systèmes de focalisation se recouvrent.

Lesdits moyens pour créer un mouvement relatif entre ledit dispositif et ladite pièce peuvent comprendre un support mobile pour le ou lesdits dispositif(s) unitaire(s).

L'invention a également pour objet une pièce réalisée en un matériau dont la surface présente une irisation ménagée au moyen d'un traitement laser, ledit traitement ayant formé des vaguelettes à la surface de ladite pièce, caractérisée en ce que lesdites vaguelettes présentent au moins deux orientations, de préférence au moins trois orientations, réparties sur la surface de ladite pièce, de préférence selon un motif périodique.

Comme on l'aura compris, l'invention consiste à supprimer, ou au moins très fortement atténuer, les problèmes liés à la directionnalité excessive de la vision de l'irisation de la surface d'un acier inoxydable traité par un dispositif comprenant un laser scanner, en imposant une polarisation différente de la lumière émise par le laser pour la formation des LIPPS de deux lignes consécutives, ou de points voisins de deux matrices de points, formés par le balayage du faisceau laser selon le champ optique de la lentille de focalisation du dispositif. L'utilisation de trois polarisations différentes au moins, pour une série d'au moins trois lignes consécutives, ou de trois matrices de points, est conseillée pour obtenir l'effet recherché.

Ce procédé peut aussi être utilisé en conjonction avec un procédé destiné à rendre invisibles ou quasiment invisibles les jonctions entre deux lignes se faisant face et réalisées par la juxtaposition de deux dispositifs à laser scanner dont les champs se recouvrent légèrement pour éviter le risque de non-traitement ou de sous-traitement de ces zones de jonction.

On notera que l'invention est applicable, dans son principe de base, aussi bien aux traitements laser par lignes qu'aux traitements laser par points, ou qu'à un traitement qui combinerait les deux modes. Bien entendu, on peut choisir de limiter le traitement à une partie de la surface de l'objet (pour laquelle un laser unique et son champ optique pourrait éventuellement être suffisant), ou de réaliser le traitement sur la totalité de la surface de l'objet. Pour ce faire, il suffit d'adapter le nombre et l'étendue du ou des champs optiques des lentilles de focalisation du ou des dispositifs à laser et l'ampleur des déplacements relatifs entre le dispositif de traitement et l'objet à traiter, de façon à ce qu'il soit possible de traiter toute la surface concernée.

L'invention sera mieux comprise à la lecture de la description qui suit, donnée en référence aux figures annexées suivantes :
- la figure 1 qui montre, comme on l'a dit dans l'introduction, la surface d'une tôle sur laquelle on a exécuté un traitement laser d'irisation par un procédé selon l'art antérieur connu, au moyen de deux dispositifs à laser de type connu contigus, formant de manière aléatoire des lignes situées dans le prolongement l'une de l'autre avec des zones de recouvrement entre deux lignes générées dans les champs optiques respectifs des deux dispositifs, dans le but de réduire la visibilité des zones de recouvrement desdites lignes ;

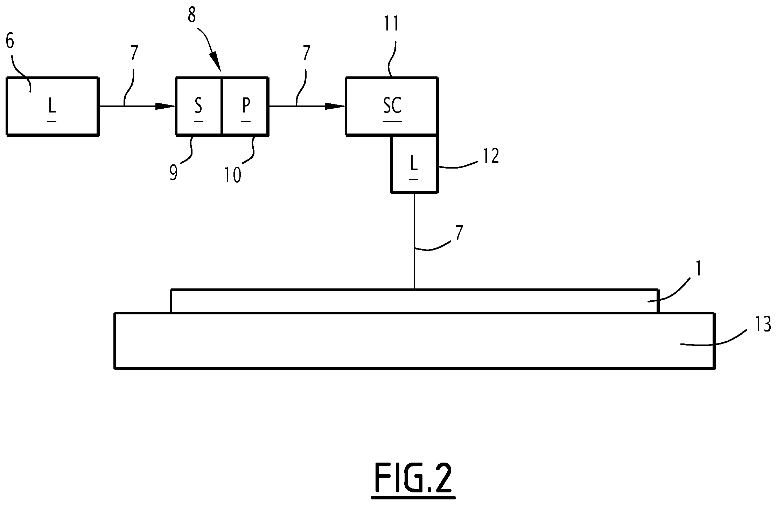

- la figure 2 qui montre le schéma de principe d'un dispositif selon l'invention, permettant la mise en œuvre du procédé selon l'invention dans le champ optique d'un dispositif de traitement laser, dans le but de rendre l'observation de l'irisation de la surface de la tôle indépendante de l'angle d'observation ;

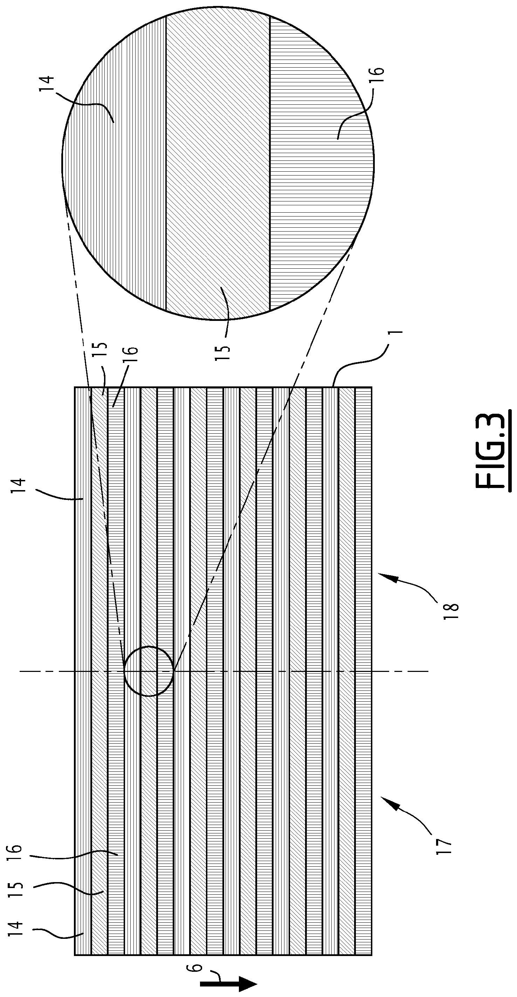

- la figure 3 qui montre la surface d'une tôle résultant de la mise en œuvre d'un procédé améliorant le procédé utilisé dans le cas de la figure 1 par deux dispositifs de traitement laser contigus, et dont l'utilisation peut se cumuler avec celle du procédé selon l'invention.

Comme on l'a dit, l'effet d'irisation obtenu par traitement avec un laser à pulses ultra-courts est lié à la formation spontanée en surface d'une structure périodique ayant un comportement analogue à un réseau optique sur la lumière se réfléchissant sur la surface. Comme discuté précédemment, le mécanisme de formation de cette structure en vaguelettes réparties périodiquement sur la surface traitée n'a pas encore été établi par la communauté scientifique.

Cependant, il a été montré (voir, par exemple, le document « Control Parameters In Pattern Formation Upon Femtosecond Laser Ablation », Olga Varlamova et al., Applied Surface Science 253 (2007) pp. 7932-7936), que l'orientation des vaguelettes était principalement liée à la polarisation du faisceau laser irradiant la surface. Ainsi, les HSFL ont une orientation parallèle à la polarisation du faisceau incident alors que les LSFL qui se forment ensuite, lorsqu'une plus grande quantité d'énergie a été apportée en surface de la tôle, ont une orientation perpendiculaire à la polarisation du faisceau incident.

Dans le cas d'un traitement laser par lignes, il en résulte donc qu'une surface traitée sans modification de la polarisation du faisceau laser au cours de ses différents passages sur une ligne donnée de ladite surface présente, en fin de traitement, une structure constituée de lignes/vaguelettes toutes orientées dans la même direction. Ceci induit que l'effet "réseau optique" de la surface est également orienté.

En effet, l'irisation apparaît comme maximale si l'observation se fait dans une direction transverse à l'orientation des vaguelettes et elle diminue au fur à mesure que l'angle d'orientation de l'observation s'aligne avec la structure de la surface. Ainsi, une observation de la surface dans l'alignement des vaguelettes ne fait pas apparaître de couleur. Cela peut constituer un inconvénient pour le produit final car cela impose de bien choisir l'orientation des vaguelettes dès le traitement pour avoir un produit sur lequel l'irisation apparaît dans les conditions d'observation voulues. De plus, le produit final n'apparaît très pleinement coloré que selon une seule direction principale d'observation.

L'invention permet de supprimer cet inconvénient, car le dispositif utilisé permet d'obtenir une surface pour laquelle l'irisation est visible de façon identique selon toutes les directions d'observation. Si deux champs successifs, formant ensemble une même ligne, possèdent la même polarisation selon cette ligne, l'effet visuel d'un double traitement de la zone de jonction entre ces deux champs tend à être beaucoup moins marqué que si les deux champs ont des polarisations différentes, avec une différence d'angle de polarisation de préférence supérieure ou égale à 20° et inférieure ou égale à 90°. Et avoir des polarisations assurément suffisamment différentes entre deux lignes successives supprime la directionnalité de l'observation de l'irisation. La conjugaison de ces phénomènes fait que l'irisation de la tôle traitée paraît beaucoup plus uniforme, dans toutes les directions d'observation, que dans le cas où on n'a pas cette alternance de polarisation entre lignes voisines.

Dans le cas où le traitement est effectué "en lignes", avec une distance séparant les centres des pulses légèrement inférieure au diamètre du pulse dans la direction de balayage rapide, pour qu'il n'y ait assurément pas de zones non traitées par le pulse, la solution selon l'invention consiste à alterner des lignes pour lesquelles l'orientation des vaguelettes est modifiée, d'une ligne à l'autre, par l'action d'un polariseur ou de tout autre type de dispositif optique polarisant, placé sur le chemin optique du faisceau.

Ainsi, soit le champ de traitement est réalisé avec un système automatique permettant de modifier la polarisation du faisceau incident entre chaque ligne, soit le champ de traitement est réalisé en un nombre de fois M égal à au moins deux, et de préférence à au moins trois, M correspondant, donc, au nombre d'orientations différentes que procurent aux vaguelettes les polarisations périodiquement successives du pulse du faisceau laser qui les forme.

Le principe de l'invention est aussi valable lorsque le traitement est effectué « par points » selon une matrice. Chaque point correspondant à un impact de pulse possède une orientation de vaguelettes différente de celle(s) de ses voisins. Dans deux champs optiques voisins, on génère des points selon des matrices qui se prolongent l'une l'autre.

La figure 2 schématise une architecture typique d'une partie d'un dispositif unitaire permettant la mise en œuvre du procédé selon l'invention pour traiter au moins une partie d'une tôle 1 d'acier inoxydable sur un champ donné. Bien entendu, ce dispositif est commandé par des moyens automatisés, qui permettent de synchroniser les mouvements relatifs du support 13 de la tôle 1 et du faisceau laser 7, ainsi que de régler les paramètres du faisceau laser 7 et sa polarisation en fonction des besoins.

Le dispositif comprend d'abord une source laser 6 d'un type classiquement connu pour la réalisation d'irisations de surfaces métalliques, donc, typiquement une source 6 générant un faisceau laser 7 pulsé de faible durée de pulse (inférieure à une nanoseconde), le diamètre de chaque pulse étant typiquement, par exemple, de l'ordre de 30 à 40 µm comme vu précédemment. L'énergie injectée sur la surface de l'acier inoxydable par le pulse est à déterminer expérimentalement, de manière à générer sur la surface de la tôle 1 des vaguelettes LIPPS, de préférence de type LSFL et éviter la formation de bumps, a fortiori de pics, et la fréquence et la puissance du faisceau laser 7 doivent être choisies en conséquence selon les critères connus de l'homme du métier à cet effet et compte tenu des caractéristiques précises des autres éléments du dispositif et du matériau à traiter. Le faisceau laser 7 généré par la source 6 passe ensuite dans un système optique de mise en forme du faisceau 8, qui, outre ses composants classiques 9 permettant de régler la forme et les dimensions du faisceau 7, comporte, selon l'invention, un élément optique polarisant 10 qui permet de conférer au faisceau 7 une polarisation choisie par l'opérateur ou les automatismes qui gèrent le dispositif.

Le faisceau laser 7 passe ensuite dans un dispositif de balayage (par exemple un scanner) 11 qui, comme il est connu, permet au faisceau 7 de balayer la surface de la tôle 1 selon une trajectoire rectiligne dans un champ de traitement. En sortie du scanner 11, là encore de manière classique, on trouve un système de focalisation 12, tel qu'une lentille de focalisation, grâce auquel le faisceau laser 7 est focalisé en direction de la tôle 1.

Dans l'exemple représenté, la tôle 1 est portée par un support mobile 13 qui permet de déplacer la tôle 1, dans un plan ou, éventuellement, dans les trois dimensions de l'espace, par rapport au dispositif de génération, de polarisation et de balayage du faisceau laser 7, pour que celui-ci puisse traiter la surface de la tôle 1 selon une nouvelle ligne du champ de traitement du dispositif représenté. Mais avant ce traitement de ladite nouvelle ligne, selon l'invention le dispositif optique de polarisation 10 du faisceau laser 7 a eu son réglage modifié, de façon à conférer au faisceau laser 7 une polarisation différente de celle qu'il avait lors du traitement de la ligne précédente.

Au moins deux angles de polarisation différents, et de préférence au moins trois, sont susceptibles d'être obtenus grâce au dispositif optique de polarisation 10, et alternent, de préférence mais pas obligatoirement, de façon périodique à chaque changement de ligne. Une périodicité du motif de polarisation n'est pas indispensable, il suffit, comme on l'a dit, que les angles de polarisation de deux lignes 14, 15, 16 voisines soient différents, de préférence d'au moins 20° et d'au plus 90°. Mais une périodicité du motif, par exemple, comme représenté, avec des angles de polarisation qui se répètent toutes les trois lignes 14, 15, 16, est préférée, dans la mesure où une programmation périodique du changement de polarisation est plus simple qu'une programmation aléatoire, en particulier comme deux lignes 14, 15, 16 appartenant à deux champs différents et situées dans le prolongement l'une de l'autre doivent avoir la même orientation de vaguelettes.

Une succession de polarisations aléatoires à l'intérieur d'un champ optique donné, respectant de préférence néanmoins le minimum d'écart angulaire précité de 20° et le maximum d'écart angulaire précité de 90°, serait acceptable, en particulier si l'installation devait pouvoir être utilisée pour traiter des tôles relativement étroites qui ne nécessiteraient pour cela qu'un champ unique et pour lesquelles la question de l'identité de polarisation sur deux lignes situées dans le prolongement l'une de l'autre et générées dans deux champs voisins ne se pose pas.

L'ensemble du dispositif de traitement de la tôle 1 comporte le plus typiquement une pluralité de dispositifs unitaires tels que celui qui vient d'être décrit, placés face à la tôle 1, et qui sont juxtaposés de façon à ce que leurs champs de traitement respectifs, c'est-à-dire les champs optiques des systèmes de focalisation 12 des scanners 11, se chevauchent légèrement. Ce chevauchement est, typiquement, de l'ordre de deux fois la taille du pulse, et on peut y ajouter une incertitude de position qui est liée à la période d'alimentation du laser en pulses et à la vitesse de balayage du laser selon l'axe rapide. On doit vérifier expérimentalement que ce chevauchement est suffisant pour assurer qu'il ne subsiste pas sur la tôle de zones non traitées à la fin de l'opération. Egalement, les lignes générées par chacun de ces champs doivent être dans la continuité les unes des autres, et les réglages des dispositifs unitaires doivent être identiques, en particulier en termes de forme, dimension, puissance et angle de polarisation à un instant t de leurs faisceaux laser 7 respectifs, pour que le traitement soit homogène sur l'ensemble d'une ligne de la largeur de la tôle 1, et que l'alternance des angles de polarisation du faisceau laser 7 entre deux lignes consécutives soit identique sur toute la largeur de la tôle.

Les moyens de commande de ces dispositifs unitaires sont, le plus typiquement, des moyens communs à tous les dispositifs unitaires, pour qu'ils agissent en parfaite synchronisation les uns avec les autres. Ils commandent aussi les déplacements du support 13 de la tôle 1.

Bien entendu, on pourrait remplacer le support mobile 13 par un support fixe, et assurer le déplacement relatif de la tôle 1 et des dispositifs unitaires de traitement en plaçant ceux-ci sur un support mobile. Les deux variantes peuvent d'ailleurs être combinées, en ce que le dispositif selon l'invention comporterait à la fois un support mobile 13 pour la tôle 1 et un autre support mobile pour les dispositifs unitaires de traitement, les deux supports pouvant être actionnés l'un ou l'autre, ou les deux simultanément, par le dispositif de commande, selon les souhaits de l'utilisateur.

Le nombre M correspond donc au nombre d'orientations différentes que l'on veut donner aux vaguelettes en assurant un interligne M fois plus grand qu'un traitement classique et en décalant les lignes d'un interligne classique entre chaque réalisation du champ. La figure 3 montre un exemple de l'aspect d'une telle réalisation avec M = 3.

La tôle 1 présente sur sa surface une succession périodique de lignes 14, 15, 16 réalisées à l'aide de deux dispositifs selon l'invention qui ont permis la réalisation de ce motif périodique de trois sortes de lignes 14, 15, 16 sur deux champs optiques 17, 18 contigus, les lignes 14, 15, 16 d'un champ donné étant dans le prolongement de lignes 14, 15, 16 du champ optique voisin.

Les lignes 14, 15, 16 du motif se distinguent les unes des autres par les effets des polarisations différentes que le dispositif de polarisation 10 a appliquées au faisceau laser 7 au moment de leur formation.

Comme on peut le voir sur la partie de la figure 3 qui représente une fraction agrandie de la surface, dans l'exemple représenté qui n'est pas limitatif, la polarisation conférée au laser lors de la génération de la première ligne 14 du motif conduit à une orientation des vaguelettes dans la direction perpendiculaire à la direction relative de défilement 6 de la tôle 1 par rapport au dispositif de traitement laser. Puis, pour générer la deuxième ligne 15 du motif, on a modifié la polarisation du faisceau laser 7 de façon à obtenir une orientation des vaguelettes à 45° de l'orientation des vaguelettes de la première ligne 14. Enfin, pour générer la troisième ligne 16 du motif, on a modifié la polarisation du faisceau laser 7 de façon à obtenir une orientation des vaguelettes à 45° de l'orientation des vaguelettes de la deuxième ligne 15, donc à 90° de l'orientation des vaguelettes de la première ligne 14 : les vaguelettes de la troisième ligne 16 sont donc orientées parallèlement à la direction relative de défilement 6 de la tôle 1 par rapport au dispositif de traitement laser.

Dans la zone de jonction de deux champs voisins, on injecte à la surface de la tôle 1 une énergie supérieure à celle qu'on injecte sur le restant de la surface, tout comme dans l'art antérieur précédemment décrit. Mais le fait que dans cette zone de jonction les lignes 14, 15, 16 de chaque champ optique qui se rejoignent ont été réalisées avec la même polarisation du faisceau laser 7 atténue nettement l'altération de l'effet visuel d'irisation de la surface que l'on constate en l'absence de polarisation contrôlée du faisceau laser 7. L'absence de continuité de l'orientation des vaguelettes d'un champ optique à l'autre aurait pour effet d'augmenter la visibilité de la zone de jonction des champs sur une ligne 14, 15, 16 donnée, en créant une zone d'hétérogénéité sur la surface. Il faut simplement veiller à ce que les lignes 14, 15, 16 des deux champs voisins qui ont été réalisées avec des polarisations identiques soient bien dans le prolongement les unes des autres, mais cette précaution sur la colinéarité des lignes 14, 15, 16 de champs voisins était aussi à prendre dans l'exécution des procédés de l'art antérieur (voir la figure 1), et le matériel connu à cet effet peut être utilisé dans le cadre de cette variante de l'invention. **Il** suffit de s'assurer que les changements de polarisation des faisceaux laser 7 des dispositifs concernant chaque champ s'effectuent avec les mêmes valeurs pour les lignes des champs qui se joignent.

L'utilisation de M = 2 orientations de polarisation différentes, déphasées, par exemple, de 90°, permet déjà d'avoir un effet d'irisation visible selon la plupart des directions. Cependant, l'intensité résultant de l'irisation varie encore assez sensiblement lors de l'observation selon un angle de 45°, et on peut juger que le problème de l'absence de directionnalité de l'effet d'irisation ne serait toujours pas résolu de façon complètement satisfaisante. Cela n'est plus visible dès que M est supérieur à 2, de préférence si les angles sont écartés de entre 20° et 90° entre deux lignes 14, 15, 16 successives.

Ainsi en réalisant un traitement avec au moins trois angles de polarisation distincts répartis entre 0 et 90° et présentant, de préférence, des différences de polarisation d'au moins 20° entre deux lignes 14, 15, 16 successives, l'expérience montre que l'irisation de la surface est visible selon toutes les directions avec une intensité similaire. On peut utiliser un nombre M d'orientations supérieur à 3, mais il faut veiller à ce que les angles de polarisation de deux lignes voisines soient suffisamment différents les uns des autres pour obtenir l'absence de directionnalité de l'effet irisé recherchée.

La même condition de différence de polarisation d'au moins 20° entre deux points voisins doit être respectée de préférence, dans le cas d'un traitement par points.

**Il** est cependant évident que la répartition de la structure de la surface selon différentes orientations induit une diminution de l'intensité totale de l'irisation en comparaison avec une surface traitée selon une seule direction de polarisation et observée selon l'angle optimal (l'angle transverse à la structure). Il y aurait donc un compromis à trouver entre l'intensité de l'effet visuel d'irisation perçu par l'observateur et le caractère omnidirectionnel de cet effet d'irisation. Mais trois directions de polarisation (donc une périodicité de trois lignes de ces directions, comme représenté sur la figure 3) représentent déjà, au moins dans les cas les plus courants, un tel bon compromis.

Dans le cas où le scanner permet de réaliser un traitement "en points", selon une matrice, l'orientation des vaguelettes pourra être modifiée entre les différents points d'une ligne et/ou entre des lignes successives. Il reste cependant important que chaque point soit formé uniquement par l'accumulation d'irradiations partageant la même polarisation, si l'énergie injectée pour former un point donné doit être injectée au moyen de plusieurs passages du faisceau laser 7. Cela peut être réalisé en changeant la polarisation du faisceau irradiant entre chaque point ou en réalisant M matrices de points, avec M égal à au moins 2 et de préférence au moins 3, ayant chacune une orientation de vaguelettes différentes, autrement dit ayant chacune été réalisée avec une polarisation différente du faisceau laser 7.

On pourrait penser à réaliser les différences entre les orientations des vaguelettes non par des moyens optiques (le polariseur 10), mais par des moyens mécaniques en opérant des modifications des orientations relatives du support 13 de la tôle 1 et du support des dispositifs à scanner laser, typiquement en faisant tourner le support 13 d'un angle égal à la différence d'orientation souhaitée pour les vaguelettes d'une ligne 14, 15, 16 donnée par rapport à celle de la ligne 14, 15, 16 réalisée précédemment. Cette solution ne serait, cependant pas idéale. En effet, la réalisation précise des vaguelettes serait tributaire des possibles irrégularités de polarisation du faisceau laser 7, et faire tourner le support 13 avec la vitesse et la précision angulaire nécessaire poserait des problèmes mécaniques complexes, notamment dans le cas d'une installation industrielle destinée à traiter des objets lourds et de grandes dimensions. L'utilisation et la commande d'un polariseur 10 sont généralement plus simples à mettre en œuvre.

Enfin pour obtenir un effet le plus homogène possible, il est recommandé d'alterner les orientations, de façon préférentiellement périodique, sur les distances les plus courtes possible. Dans le cas de lignes, on préférera pour M orientations différentes alterner périodiquement une seule ligne de chaque orientation, de largeur égale ou, de préférence (pour assurer un traitement de l'ensemble de la surface de la tôle) légèrement inférieure au diamètre du pulse. Dans le cas du traitement en points, on préfèrera alterner périodiquement les orientations sur un motif carré ou rectangulaire contenant un nombre de points égal au nombre d'orientations différentes possibles pour la polarisation des faisceaux laser 7.

Bien entendu, il demeurerait dans l'esprit de l'invention d'appliquer ce procédé à une tôle dont la relativement faible largeur ne nécessiterait qu'un seul scanner pour réaliser la structuration de toute sa surface en lignes de différentes polarisations selon un motif périodique. On profiterait ainsi de l'avantage principal de l'invention selon lequel l'intensité de l'irisation ne dépend pas de l'angle d'observation de la tôle. Si on ne veut traiter que de telles tôles de faible largeur, on peut alors se permettre de le faire avec une installation qui ne comporterait qu'un seul dispositif selon la figure 2.

On a aussi la possibilité de traiter sur la même installation à la fois des tôles de relativement faible largeur, inférieure ou égale à celle d'un champ de traitement d'un dispositif selon la figure 2, et des tôles de plus grande largeur nécessitant la juxtaposition de plusieurs dispositifs selon la figure 2 agissant chacun sur un seul champ de traitement. Pour cela, il suffit de n'activer qu'un seul de ces dispositifs lorsqu'on traite une tôle de faible largeur. Le fait de pouvoir utiliser le procédé selon l'invention pour de multiples largeurs de tôles, et avec les mêmes réglages pour chaque champ pris individuellement, permet d'obtenir des tôles d'aspect identique indépendamment de ladite largeur, et ainsi d'homogénéiser l'aspect de la gamme de produits de diverses largeurs que le fabricant peut désirer produire.

On peut traiter des tôles 1 dont la planéité ne serait pas parfaite en incluant dans le dispositif de traitement des moyens de mesure de la distance entre le système de focalisation 12 et la tôle 1, et en les couplant aux moyens de commande du système de focalisation 12, pour que celui-ci garantisse que le diamètre du pulse et la fluence du faisceau laser soit sensiblement les mêmes quelle que soit la distance effective entre le système de focalisation 12 et la tôle 1. La distance entre le système de focalisation et la surface de la tôle 1 est aussi un paramètre sur lequel on peut jouer, si on peut l'ajuster en temps réel par des moyens mécaniques appropriés.

On peut aussi envisager l'application du procédé à d'autres matériaux que des tôles planes (par exemple à des tôles mises en forme, à des barres, à des tubes, à des surfaces tridimensionnelles en général), en adaptant en conséquence les moyens de déplacement relatif des lasers et de la surface, et/ou les moyens de focalisation si on doit gérer des différences de distance entre l'émetteur laser et la surface. Dans le cas des pièces présentant des surfaces sensiblement cylindriques (barres et tubes de section circulaire, par exemple), une façon de procéder serait de placer les dispositifs laser sur un support fixe et de prévoir, pour la pièce, un support permettant de la mettre en rotation pour faire défiler la surface de la pièce dans les champs optiques des lasers.

On rappelle enfin que si les aciers inoxydables sont des matériaux auxquels l'invention est applicable de façon privilégiée, les autres matériaux, métalliques ou non-métalliques, sur lesquels l'effet d'irisation de la surface au moyen d'un traitement laser peut être obtenu, sont aussi concernés par l'invention.

## Revendications

1. Dispositif unitaire pour l'imposition d'un aspect irisé à la surface d'une pièce (1) par formation de vaguelettes sur ladite surface par le pulse d'un faisceau laser, comportant une source laser (6) générant un faisceau laser (7) de durée de pulse inférieure à 1 ns, un système optique (8) de mise en forme du faisceau (7), un scanner (11) qui permet au pulse du faisceau (7), après son passage dans un système de focalisation (12), de balayer sous forme de lignes ou de matrice de points un champ optique à la surface de la pièce (1), et des moyens pour créer un mouvement relatif entre ledit dispositif et ladite pièce (1) de manière à réaliser le traitement sur au moins une partie de la surface de ladite pièce (1), **caractérisé en ce que** ledit système optique (8) comporte un système optique de polarisation (10) qui confère une polarisation déterminée audit faisceau (7), et des moyens pour faire varier cette polarisation pour que, sur ladite surface, les lignes ou les points voisins soient réalisés avec des pulses de polarisations différentes, le dispositif comportant des moyens de mesure de la distance entre le système de focalisation (12) et la surface de la pièce (1) reliés à des moyens de commande du système de focalisation (12) et/ou de la distance entre le système de focalisation (12) et la surface de la pièce (1) pour maintenir un diamètre de pulse et une fluence constants sur ladite surface, quelle que soit ladite distance.

2. Dispositif unitaire selon la revendication 1, **caractérisé en ce que** ledit dispositif permet de réaliser deux lignes ou deux points voisins avec des pulses de polarisations qui différent d'au moins 20° et d'au plus 90°.

3. Dispositif selon l'une des revendications 1 ou 2, **caractérisé en ce que** la source laser (6) est propre à générer un pulse de diamètre compris entre 30 et 40 µm.

4. Dispositif selon l'une des revendications 1 à 3, **caractérisé en ce que** le système optique de polarisation (10) et les moyens pour faire varier la polarisation sont propres à faire varier la polarisation du faisceau laser (7) selon un motif périodique, ledit motif périodique s'étendant sur M lignes consécutives, M étant égal à au moins 2, de préférence à au moins 3.

5. Dispositif selon l'une des revendications 1 à 4, **caractérisé en ce que** les moyens pour faire varier la polarisation sont propres à alterner des lignes pour lesquelles l'orientation des vaguelettes est modifiée d'une ligne de la série de lignes (14, 15, 16) à l'autre.

6. Dispositif selon l'une des revendications 1 à 5, **caractérisé en ce que** les moyens pour faire varier la polarisation sont propres à faire en sorte que chaque point de la matrice de points possède une orientation de vaguelettes différente de celles des points voisins.

7. Dispositif unitaire selon l'une des revendications 1 à 6, **caractérisé en ce que** lesdits moyens pour créer un mouvement relatif entre ledit dispositif et ladite pièce (1) comprennent un support mobile (13) pour la pièce (1).

8. Dispositif unitaire selon l'une des revendications 1 à 7, **caractérisé en ce que** lesdits moyens pour créer un mouvement relatif entre ledit dispositif et ladite pièce (1) comprennent un support mobile (13) pour le ou lesdits dispositif(s) unitaire(s).

9. Dispositif unitaire selon la revendication 8, **caractérisé en ce que** le support mobile (13) est propre à déplacer la tôle (1) dans les trois dimensions de l'espace.

10. Dispositif unitaire selon l'une des revendications 1 à 9, **caractérisé en ce qu'**il comprend des moyens automatisés propres à synchroniser les mouvements relatifs de la tôle (1) et du faisceau laser (7), et à régler les paramètres du faisceau laser (7) et sa polarisation.

11. Dispositif pour l'imposition d'un aspect irisé à la surface d'une pièce (1) par formation de vaguelettes sur ladite surface par le pulse d'un faisceau laser, **caractérisé en ce qu'**il comporte au moins deux dispositifs unitaires selon l'une quelconque des revendications 1 à 10, dont les champs optiques des systèmes de focalisation se recouvrent.

12. Dispositif selon la revendication 11, **caractérisé en ce que** les moyens de commande sont communs aux dispositifs unitaires.
